# EUROPEAN PATENT APPLICATION

(11) **EP 4 726 239 A1**
(43) Date of publication of application: **15.04.2026**
(21) Application number: 25208315.9
(22) Date of filing: 13.10.2025
(51) Int. Cl.: F16K 1/44, F16K 37/00

(54) **SMART VALVE MONITORING SYSTEM AND METHOD**

(30) Priority: 11.10.2024 US 202463706204 P
(71) Applicant: Pentair Südmo GmbH, 73469 Riesbürg (DE)
(72) Inventor: SCHMIDTHALS, Cord, 73469 Riesbürg, BW (DE); NEUHAUSER, Frank, 73469 Riesbürg, BW (DE); SCHMID, Tobias, 73469 Riesbürg, BW (DE); DRAGT, Johannes Dirk Gerrit, 73469 Riesbürg, BW (DE)
(74) Representative: Viering, Jentschura & Partner mbB Patent- und Rechtsanwälte

(57) **Abstract**

A valve (106) system is disclosed. It comprises a valve (106) including a housing, a valve (106) mechanism designed to control a flow of fluid through the housing, a sealing element coupled to the valve (106) mechanism, and a sensor operably coupled to at least one of the valve (106) mechanism and the sealing element; and a controller (115) in communication with the valve (106), the controller (115) is designed to record a first dataset of measured force from the sensor during operation of the valve (106); record a second dataset of measured force from the sensor during operation of the valve (106); and output a condition of the sealing element when the second dataset of measured force is different than the first dataset of measured force.

## Description

### CROSS-REFERENCE TO RELATED APPLICATION

This application claims priority under 35 U.S.C. § 119 to U.S. Provisional Patent Application No. 63/706,204 filed on October 11, 2024, the entire contents of which are incorporated herein by reference.

### BACKGROUND

In fluid processing environments, valves control fluid moving through a pipe system and one or more tanks. The valves can include valve discs that are selectively moveable to direct the flow of fluid. The valve discs engage with sealing elements to prevent fluid from leaking out of the valve and leaking into other portions, such as internal cavities, of the valve.

The sealing elements begin to wear and become less effective after repeated use. Worn sealing elements cause fluids to leak out of the valve (e.g., the leak may be visible shortly after the sealing element wears) and into one or more of the internal cavities of the valve, into the pipe system, and/or into the fluid processing environment. In cases where the fluid leaks, the valve must be disassembled to inspect the sealing elements. This renders the valve inoperable for a period of time, which can be costly and burdensome.

One method for evaluating the wear of the sealing elements includes using a single friction measurement to evaluate the condition of the sealing elements. However, the single friction measurement can result in inaccurate readings of the wear of the sealing elements, because sealing elements have a variety of frictional characteristics (e.g., not just a single frictional characteristic). For example, sealing elements may swell because of a chemical attack (e.g., EPDM in oil) causing an initial reduction in the friction because of the lubrication effect of the oil, or sealing elements may swell or degrade due to one or more of the combination of the frictional effects and a chemical attack of product media or cleaning liquids.

Therefore, there is a need for an accurate method to measure the wear of at least one sealing element within a valve.

### SUMMARY

In one instance, a method for evaluating a condition of at least one sealing element of a valve is disclosed. The operation of the valve consists of opening and closing movements. The time of data set recording is determined by the time of each opening and closing. The system detects this time called cycle-time automatically and adjusts the time of recording accordingly. The time until the measured values are stable in the sense that the variation is not larger than a predetermined value is denoted as a run-in time. After the run-in time, a first (e.g., baseline) data set is determined and stored. The method includes actuating the valve between an open position and a closed position for a first cycle-time. The method also includes storing a first (e.g., baseline) dataset (e.g., of measured values) of at least one sealing element, actuating the valve for a second cycle-time and recording a second dataset (e.g., of measured values) and storing a second dataset of the at least one sealing element, comparing the first dataset to the second dataset to determine whether a change or a shift has occurred between the first dataset and the second dataset, estimating a condition of the at least one sealing element based on the change or the shift, and outputting the condition of the at least one sealing element. The measured values can be derived from force measurements, pressure measurements, position measurements, and/or a combination of these values (e.g., measurements). In another instance, the recorded or measured data sets are compared to pre-defined data sets. Each pre-defined data set (e.g., reference curve) corresponds to a specific state of the sealing elements.

In another instance, a valve system is provided. The valve system includes a housing, a valve mechanism designed to control a flow of fluid through the valve, a sealing element coupled to the valve mechanism, and at least one sensor operably coupled to at least one of the valve mechanism or the sealing element. The valve system further includes a controller in communication with (e.g., the at least one sensor in) the valve. The controller is designed to record a first (e.g., baseline) dataset of measured values from the at least one sensor (e.g., during operation of the valve), record a second dataset of measured values from the at least one sensor (e.g., over a cycle-time) during operation of the valve, and output a remaining lifetime value of the sealing element when the second dataset of measured values is different than the first dataset of measured values.

In a further instance, a fluid processing system is provided. The fluid processing system includes at least one tank, a pipe system in fluid communication with the at least one tank, and a valve system. The valve system includes a valve having a housing, a valve mechanism designed to control a flow of fluid through the valve, a sealing element coupled to the valve mechanism, and at least one sensor operably coupled to at least one of the valve mechanism or the sealing element. The valve system also includes a controller in communication with at least one sensor in the valve. The controller is designed to record a first (e.g., baseline) dataset of values from the sensor during operation of the valve, record a second dataset of measured values from the at least one sensor (e.g., over a second cycle-time) during operation of the valve, and output an estimated point of failure value of the sealing element when the second dataset of measured values is different than the first dataset of measured value.

Some embodiments provide a method for evaluating a condition of at least one sealing element of a valve, the method including: actuating the valve between an open position and a closed position for a first cycle-time and recording and storing a first dataset of the at least one sealing element; actuating the valve between the open position and the closed position for a second cycle-time and recording and storing a second dataset of the at least one sealing element; comparing the first dataset to the second dataset or a pre-defined dataset to determine a difference between the first dataset and the second dataset or the first dataset and the pre-defined dataset; and outputting the condition of the at least one sealing element based on the difference.

In some instances, outputting the condition of the at least one sealing element includes sending an alert according to a schedule, which is at least one of a daily schedule, a weekly schedule, or a monthly schedule.

In some instances, outputting the condition of the at least one sealing element comprises estimating an amount of wear on the at least one sealing element.

In some instances, one or more of the first dataset, the second dataset, and the pre-defined dataset includes measured values based on at least one of force measurements, pressure measurements, position measurements, or a combination thereof.

In some instances, outputting the condition of the at least one sealing element includes disabling the valve if the at least one sealing element is determined to be near a point of failure.

In some instances, the first dataset is recorded directly after the valve is powered on.

In some instances, the valve is provided as at least one of a single seat valve, double seat valve, a ball valve, a butterfly valve, or a globe valve.

In some instances, the condition of the at least one sealing element is stored.

In some instances, the at least one sealing element is provided as at least one of an O-ring, a radial seal ring, or a form-fit profile seal.

Some embodiments provide a valve system, that includes a valve and a controller. The valve includes a housing, a valve mechanism designed to control a flow of fluid through the housing, a sealing element coupled to the valve mechanism, and a sensor operably coupled to at least one of the valve mechanism and the sealing element. The controller is in communication with the valve. The controller is designed to record a first dataset of measured force from the sensor during operation of the valve; record a second dataset of measured force from the sensor during operation of the valve; and output a condition of the sealing element when the second dataset of measured force is different than the first dataset of measured force.

In some instances, the controller is a control unit coupled to the housing of the valve.

In some instances, the controller is separate from the housing and is in wired communication or wireless communication with the valve.

In some instances, the first dataset is provided as a first graph, and the second dataset or a pre-defined dataset is provided as a second graph, and the controller compares the first graph and the second graph to determine the condition of the sealing element.

In some instances, the condition of the sealing element includes a remaining lifetime of the sealing element.

In some instances, the valve mechanism includes a valve disc that is selectively moveable within the housing, and the sealing element substantially circumscribes the valve disc.

In some instances, the valve has a first fluid conduit extending through the valve in a first direction and a second fluid conduit extending through the valve in a second direction, the first direction being different from the second direction.

In some instances, the sensor is at least one of a piezoelectric sensor, a pneumatic pressure sensor, a position sensor, or an electrical actuator.

Some embodiments provide a fluid processing system that includes a least one tank, a pipe system, and a valve system. The a pipe system is in fluid communication with the at least one tank. The valve system includes a valve and a controller. The valve includes a housing, a valve mechanism designed to control a flow of fluid through the valve, a sealing element coupled to the valve mechanism, and a sensor operably coupled to at least one of the valve mechanism and the sealing element. The controller is in communication with the valve. The controller is designed to record a first dataset of measured force from the sensor over a first time period during operation of the valve, record a second dataset of measured force from the sensor over a second time period during operation of the valve, and output an estimated point of failure value of the sealing element when the second dataset of measured force is different than the first dataset of measured force.

In some instances, the controller is designed to train an artificial intelligence model based on at least one of the first dataset or the second dataset.

In some instances, the artificial intelligence model is provided as one or more of machine learning, neural networks, deep learning, computer vision, decision trees, vector quantization, gradient boosting algorithms, mutual information classifiers, and random forest classifications.

### BRIEF DESCRIPTION OF THE DRAWINGS

The accompanying drawings, which are incorporated in and form a part of this specification, illustrate embodiments of the invention and, together with the description, serve to explain the principles of embodiments of the invention:
FIG. 1 is an isometric view of a fluid processing environment including a plurality of smart valves;
FIG. 2 is an isometric view of one of the plurality of smart valves of FIG. 1;
FIG. 3 is a cross-sectional view of the smart valve of FIG. 2 taken along line X-X of FIG. 2;
FIG. 4 is a partial cross-sectional view of a lower housing of the smart valve of FIG. 2 taken along line X-X of FIG. 2;
FIG. 5A is a partial cross-sectional view of the lower housing of FIG. 2, taken along line X-X of FIG. 2, in an open configuration, with low density stippling depicting a first fluid;
FIG. 5B is a partial cross-sectional view of the lower housing of FIG. 2, taken along line X-X of FIG. 2, in a closed configuration, with low density stippling depicting a first fluid that is hermetically separated from a second fluid depicted with medium density stippling;
FIG. 5C is a partial cross-sectional view of the lower housing of FIG. 2, taken along line X-X of FIG. 2, in a lower draining configuration, with low density stippling depicting a first fluid that is hermetically separated from a second fluid depicted with medium density stippling;
FIG. 5D is a partial cross-sectional view of the lower housing of FIG. 2, taken along line X-X of FIG. 2, in an upper draining configuration, with low density stippling depicting a first fluid that is hermetically separated from a second fluid depicted with medium density stippling;
FIG. 6 is a block diagram illustrating a method for evaluating the condition of one or more sealing elements of the smart valve of FIG. 2;
FIG. 7A is a graph illustrating a first or baseline dataset of values recorded for a sealing element within the smart valve of FIG. 2, the first dataset associated with the method of FIG. 6;
FIG. 7B is a graph illustrating a second dataset of values recorded for the sealing element within the smart valve of FIG. 2, the second dataset associated with the method of FIG. 6;
FIG. 7C is a graph illustrating a third dataset of values recorded for the sealing element within the smart valve of FIG. 2, the third dataset associated with the method of FIG. 6; and
FIG. 8A is a graph illustrating a plurality of second dataset values recorded for the sealing element within the smart valve of FIG. 2, the second dataset associated with the method of FIG. 6;
FIG. 8B is an enlarged view of a portion of the graph shown in FIG. 8A, with the enlarged view illustrating normalized data of the datasets of FIG. 8A;
FIG. 9A is a display with an output of processed data of FIG. 8B; and
FIG. 9B is the output of FIG. 9.

### DETAILED DESCRIPTION

Various modifications to the illustrated embodiments will be readily apparent to those skilled in the art, and the generic principles herein can be applied to other embodiments and applications. Thus, it is to be understood that the disclosure is not limited in its application to the details of the configuration and arrangement of components set forth in the following description or illustrated in the accompanying drawings. The disclosure is capable of being practiced or conducted in various ways and is to be accorded the widest scope consistent with the principles and features disclosed herein. The following detailed description is to be read with reference to the figures, in which like elements in different figures have like reference numerals. The figures, which are not necessarily to scale, depict selected embodiments and are not intended to limit the scope of embodiments of the disclosure. Skilled artisans will recognize the examples provided herein have many useful alternatives and fall within the scope of the disclosure.

Before any embodiments are explained in further detail, it is to be understood that the disclosure is not limited in its application to the details of construction and the arrangement of components set forth in the following description or illustrated in the attached drawings. The disclosure is capable of other embodiments and of being practiced or of being conducted in various ways. Also, it is to be understood that the phraseology and terminology used herein are for the purpose of description and should not be regarded as limiting. For example, the use of "including," "comprising," or "having" and variations thereof herein is meant to encompass the items listed thereafter and equivalents thereof as well as additional items.

As used herein, unless otherwise specified or limited, the terms "mounted," "connected," "supported," and "coupled" and variations thereof are used broadly and encompass both direct and indirect mountings, connections, supports, and couplings. Further, unless otherwise specified or limited, "connected" and "coupled" are not restricted to physical or mechanical connections or couplings.

As used herein, unless otherwise specified or limited, "at least one of A, B, and C," and similar other phrases, are meant to indicate A, or B, or C, or any combination of A, B, or C. As such, this phrase, and similar other phrases can include single or multiple instances of A, B, or C, and, in the case that any of A, B, or C indicates a category of elements, single or multiple instances of any of the elements of the categories A, B, or C.

As explained above, it would be useful to provide a system and method for evaluating the condition of one or more sealing elements within a valve.

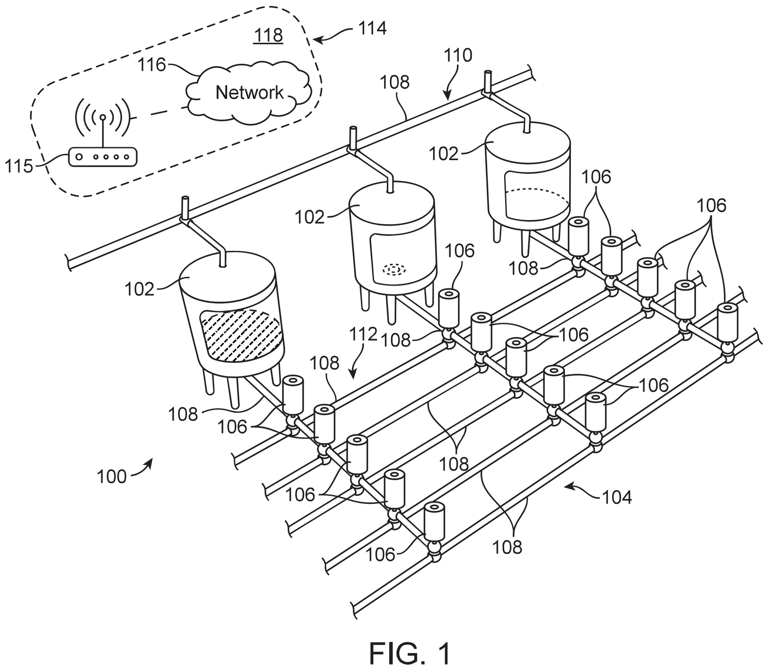

FIG. 1 illustrates a fluid processing environment 100 (e.g., a tank farm). The fluid processing environment 100 is designed to process and/or store at least one fluid (e.g., cosmetics, pharmaceuticals, carbonated or alcoholic beverages, and/or dairy products). In one instance, the processing environment processes and/or stores the at least one fluid in a sterile or hygienic manner.

In one instance, the fluid processing environment 100 is provided in the form of at least one tank 102, a pipe system 104 in fluid communication with the at least one tank 102, and at least one valve (e.g., a smart valve) or valve system 106 in (e.g., fluid) communication with the pipe system 104. In some instances, the fluid processing environment 100 also may include a manufacturing control system 114 with an optional central controller 115 and a network 116.

Each tank 102 may be designed to retain a fluid or to perform one or more operations to the at least one fluid, such as mixing, storing, or carbonating the fluid therein. For example, each tank 102 may store, mix, filter, heat, cool, distill, or ferment the fluid therein.

The pipe system 104 may include at least one pipe 108 fluidly coupling the at least one tank 102 and the at least one valve 106 to facilitate processing and/or storage of the fluid. As shown in FIG. 1, the pipe system 104 is provided in a grid-like manner. In other instances, the fluid processing environment 100 may be arranged in any configuration. Moreover, the pipe system 104 may have an input portion 110 (e.g., upstream of the at least one tank 102) and an output portion 112 (e.g., downstream of the at least one tank 102). The input portion 110 may provide a first fluid (e.g., a raw ingredient) to the at least one tank 102, and the output portion 112 may carry the first fluid away from the environment 100 and/or may receive a second fluid (e.g., a manufactured product) from the at least one tank 102.

Still referring to FIG. 1, a plurality of valves 106 are shown in the environment 100. Each valve 106 may facilitate the routing of one or more fluids within the environment 100 or may enable a fluid to pass therethrough. The environment 100 can have one valve 106 or any number of valves 106. In one instance, at least one valve 106 is positioned at an intersection of at least two pipes 108 of the pipe system 104.

The valve 106 may be fluidly coupled to the at least one tank 102 and the pipe system 104, such that the valve 106 may control the flow of fluid through the pipe system 104 and the at least one tank 102. In particular, each of the valves 106 may be selectively actuatable to control the flow of fluid therethrough.

Continuing with FIG. 1, the fluid processing environment 100 may also include the manufacturing control system 114 with an optional controller 115 and the network 116. The manufacturing control system 114 may be communicatively coupled to the fluid processing environment 100 to control, receive, and/or store data from the fluid processing environment 100. For example, the manufacturing control system 114 may be in wireless communication or wired communication via the network 116 to directly or indirectly communicate and/or operate the at least one tank 102, the at least one valve 106, and the other components (e.g., sensors) within the fluid processing environment 100.

Specifically, the controller 115 may intelligently manage the fluid flow between the tank 102, the pipe system 104, and the valve 106. The controller 115 can be provided in the form of a data-processing device configured to transmit and receive data from the environment 100. For example, the controller 115 may receive information at a receiver (not shown). A processor (not shown) included in the controller 115 may analyze the received data and determine instructions to be sent back to the environment 100. A transmitter (not shown) of the controller 115 may send the instructions from the processor to one or more components of the environment 100. The controller 115 can further include a memory (not shown). The memory can be configured to store data received from the environment 100. The memory can be implemented as a stand-alone memory unit and/or as part of a processor included in the controller 115. Further, in one nonlimiting embodiment, the network 116 may be coupled to the memory, which may include program instructions that are stored in the memory and executable by the processor to perform one or more of the methods described herein.

The network 116 can be provided in the form of a network interface, a local network, or other communication connection and is not limited to the plurality of communication connections. One skilled in the art will recognize that a communication connection can transmit and receive data using a plurality of communication protocols, including but not limited to wired, wireless, Bluetooth, cellular, satellite, GPS, RS-485, Radio Frequency, MODBUS, CAN, CANBUS, DeviceNet, ASInterface, IO-link, ControlNet, Ethernet TCP/IP, RS-232, Universal Serial Bus (USB), Firewire, Thread, proprietary protocol(s), or other communication protocol(s) as applicable. In some embodiments, the network 116 is located proximate to one or more components of the environment 100. The network 116 can include the Internet, intranets, extranets, wide area networks ("WANs"), local area networks ("LANs"), wired networks, wireless networks, cloud networks, or other suitable networks, or any combination of two or more networks, Ethernet networks, and other types of networks. The network 116 may be configured to communicate directly or indirectly with the environment 100 and/or a user device 118, such as a mobile phone having an application or a display.

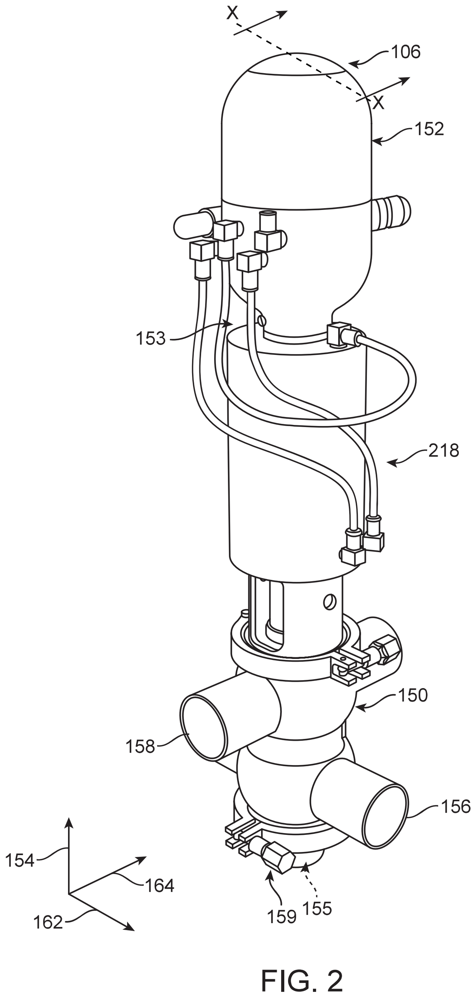

Turning to FIG. 2, the at least one valve 106 is provided in the form of a valve body 150 (e.g., a valve housing) and a control unit 152 communicatively coupled thereto. The valve body 150 and the control unit 152 may be removably coupled to one another with a bracket or a fastening means. In one instance, the control unit 152 is coupled to an upper end 153 of the valve body 150, as shown in FIG. 2. In one such instance, the valve body 150 and control unit 152 are aligned or substantially parallel to one another along a vertical axis (e.g., y-axis) 154. In other instances, the control unit 152 is integrally formed with the valve body 150. In yet other instances, the control unit 152 is positioned and located a distance away from the valve body 150, such that the control unit 152 may or may not be parallel with the valve body 150 and may or may not be parallel to the vertical axis 154.

The valve body 150 can include a valve actuating mechanism 218 (shown in FIG. 2) and the valve body 150 is designed to direct a flow of fluid through the valve 106 and through the one or more pipes 108 (see FIG. 1). In some instances, the valve body 150 is provided as a cylindrical elongated structure extending along the vertical axis 154. The valve body 150 may include a drainage outlet 155, a first conduit 156, and a second conduit 158, all of which facilitate fluid flow through the valve 106.

The drainage outlet 155 may be positioned at a lower end 159 of the valve body 150 (e.g., opposite the control unit 152) and may be designed to selectively allow fluid to exit the valve body 150. It is understood that the valve body 150 may have any number of conduits and/or drainage outlets to facilitate the flow of fluid through the valve 106 and/or through the environment 100.

The drainage outlet 155 may be provided as a (e.g., circular) opening extending through the valve body 150. The outlet 155 may be positioned along the vertical axis 154. As will be described further herein, the valve 106 may be actuated to selectively drain fluid through the drainage outlet 155. Thus, the drainage outlet 155 may be used to drain and flush fluid selectively from the first conduit 156 and/or the second conduit 158 when switching between fluids, products, and/or batches in the fluid processing environment 100.

Continuing with the valve body 150, the first conduit 156 and the second conduit 158 are designed to couple with the one or more pipes 108, such that each of the first conduit 156 and the second conduit 158 are sized and shaped to align, removably or firmly (e.g., permanently) couple, and be in fluid communication with at least one pipe 108. In one instance, the first conduit 156 and/or the second conduit 158 are welded to other conduits and/or pipes within the environment 100. In one instance, the first conduit 156 and the second conduit 158 are provided in the form of cylindrical tubes or channels extending through the valve body 150. The first conduit 156 and the second conduit 158 may each have an inlet and an opposing outlet (e.g., two openings) to facilitate fluid flow therethrough. In other instances, each of the first conduit 156 and the second conduit 158 may provide a single opening for fluid to enter or exit the valve body 150.

In some instances, the first conduit 156 extends through the valve body 150 in a first direction 162 (e.g., an x-axis or a first horizontal axis), and the second conduit 158 extends through the valve body 150 in a second direction 164 (e.g., a z-axis or a second horizontal axis), which is substantially perpendicular to the first direction 162. The first conduit 156 and the second conduit 158 can be substantially perpendicular to the axis 154 and are substantially perpendicular to one another. In other instances, the first conduit 156 and the second conduit 158 form an angle between about 0 degrees and about 90 degrees with respect to one another. In additional instances, the first conduit 156 and/or the second conduit 158 can form an angle between about 0 degrees and about 90 degrees with respect to at least one of the planes formed in the first direction 162 and/or the second direction 164. In alternative instances, the first conduit 156 and/or the second conduit are substantially parallel to one another, such that the first conduit 156 and the second conduit 158 are both aligned with at least one of the first direction 162 or the second direction 164.

As shown in FIG. 2, the first conduit 156 may be provided below the second conduit 158 along the vertical axis 154. In other instances, the first conduit 156 may be positioned above the second conduit 158 along the vertical axis 154. In other instances, the first conduit 156 and/or the second conduit 158 may extend into, but not through, the valve body 150. It is to be understood that the first conduit 156 and the second conduit 158 may be configured in any suitable position or orientation with respect to the valve body 150.

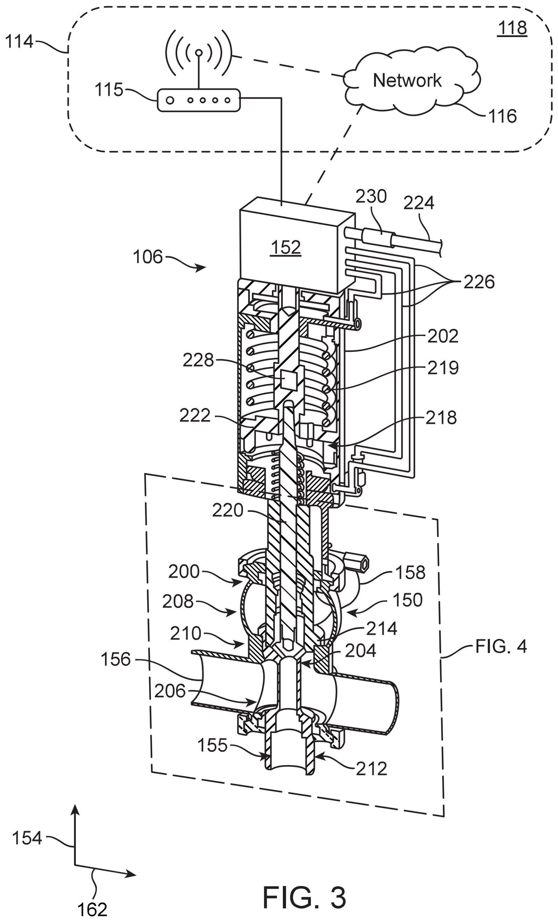

Continuing with FIG. 2, the control unit 152 is designed to (e.g., send a trigger signal to start the) control the valve body 150 and to communicatively couple the valve body 150 with the network 116 (shown in FIG. 1), the controller 115, and/or the manufacturing control system 114 (shown in FIG. 1). In some instances, the control unit 152 may be provided in the form of a housing shaped as an ellipsoid, as illustrated in FIG. 2. However, in other instances, the control unit 152 may have any shape, such as a rectangular prism shape (shown in FIG. 3). In addition, the control unit 152 may include a processor (not illustrated), a memory (not illustrated), and a communication module (not illustrated) in electrical communication with one another and/or the network 116, the controller 115, and/or the manufacturing control system 114. Moreover, the control unit 152 may include analytics software.

Turning to FIG. 3, the valve body 150 may include a lower housing 200 and an upper housing 202 integrally formed with one another. Alternatively, the lower housing 200 and the upper housing 202 may be coupled together. As will be discussed herein, each of the lower housing 200 and the upper housing 202 include a plurality of seals therein to prevent fluid(s) within the valve 106 from leaking or mixing. The plurality of seals may be provided in the form of an elastomer, rubber, metal, or any suitable material (e.g., fluorocarbon-based fluoroelastomer materials (FKM) or hydrogenated nitrile butadiene rubber (HNBR) or ethylene-propylene diene monomer (EPDM) and/or a combination thereof); however, each seal or sealing element is subject to wear during actuation of the valve 106.

The lower housing 200 is designed to receive fluid from the conduits 156, 158 and to control the flow of the fluid through the valve 106. The lower housing 200 may be provided in the form of a shell (e.g., a hollow body) surrounding a fluid control mechanism 204. In some instances, the lower housing 200 may include a first portion 206 for interfacing and being in fluid communication with the first conduit 156, a second portion 208 for interfacing and being in fluid communication with the second conduit 158, and an intermediate portion 210 (e.g., between the first portion 206 and the second portion 208) for fluidly coupling the first portion 206 and the second portion 208.

The fluid control mechanism 204 is designed to selectively establish fluid communication between the first portion 206, the second portion 208, and the intermediate portion 210 of the lower housing 200 to thereby control the flow of fluid between the first conduit 156, the second conduit 158, and the drainage outlet 155. The fluid control mechanism 204 may be provided in the form of a lower valve disc 212 and an upper valve disc 214 positioned and located within the lower housing 200. The lower valve disc 212 and the upper valve disc 214 may be selectively moveable within the lower housing 200 to facilitate operating the fluid control mechanism 204 (e.g., as a double seat valve mechanism). However, in other instances, the fluid control mechanism 204 may be configured differently (e.g., as a ball valve mechanism, a butterfly valve mechanism, or a globe valve mechanism).

Continuing with FIG. 3, the upper housing 202 is designed to operatively couple the fluid control mechanism 204 to the control unit 152 such that the control unit 152 can actuate the valve 106. The upper housing 202 may be provided in the form of a shell (e.g., a hollow cylinder) extending along the vertical axis 154 and surrounding the valve actuating mechanism 218 and a spring or coil 219 to provide a compressive force within the upper housing 202. In some instances, the upper housing 202 is positioned and located between the control unit 152 and the lower housing 200. In other instances, the upper housing 202 may be positioned elsewhere (e.g., below the lower housing 200).

The valve actuating mechanism 218 is designed to actuate the fluid control mechanism 204 in response to inputs from the control unit 152. In some instances, the valve actuating mechanism 218 is provided in the form of a (e.g., pneumatic) actuator having a shaft 220 and a piston 222 coupled together. The shaft 220 may engage at least one of the valve discs 212, 214, and the piston 222 to form a substantially airtight seal with the upper housing 202. As a result, pressure changes within the upper housing 202 may cause the shaft 220 to move along the vertical axis 154, which may cause the upper valve disc 214 and/or the lower valve disc 212 to move along the vertical axis 154. In other instances, the valve actuating mechanism 218 may be provided as another suitable mechanism (e.g., an electric motor coupled to the shaft 220). Moreover, the upper housing 202 and/or the valve actuating mechanism 218 may have any number of sealing elements (e.g., seals) to prevent fluid from leaking into or out of the valve 106.

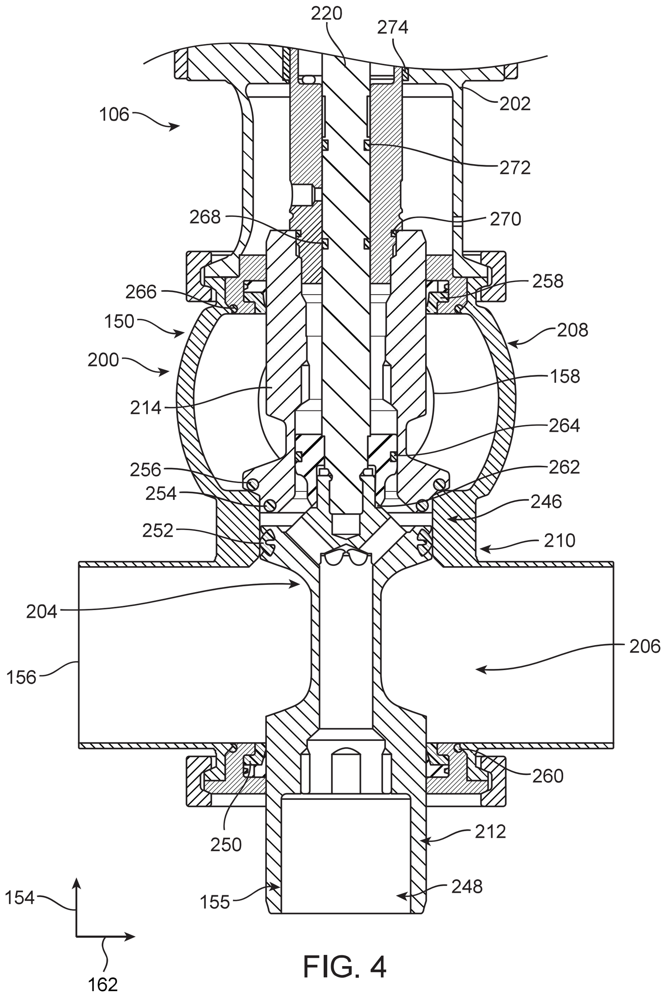

Continuing with FIG. 3, the control unit 152 is designed to interface with the valve 106 to control the valve 106 and to receive data from (e.g., at least one sensor (discussed herein) in) the valve 106. In particular, the control unit 152 may be provided in the form of a controller (not illustrated) operably coupled to a pneumatic input tube 224 and one or more pneumatic output tubes 226, and the control unit 152 may be in (e.g., electrical) communication with a first sensor 228, a second sensor 230, the manufacturing control system 114, and/or the network 116. In one instance, the control unit 152 and/or the valve 106 may have or be in communication with any number of sensors to facilitate data collection and/or operation (e.g., actuation) of the valve 106 and/or data collection and/or operation of at least one sealing element 246 (shown in FIG. 4). Further, the first sensor 228 may be a force sensor coupled to or coupled near the shaft 220, and the first sensor 228 may be designed to measure the friction of at least one sealing element 246 (shown in FIG. 4). The friction may also be measured by measuring the inlet pressure of the valve actuating mechanism 218 in combination with the use of a position measurement system (not shown) of the shaft 220. For example, the measurement of pressure and tension may be about 3kN. In some instances, (e.g., where the valve actuating mechanism 218 is an electric actuator) the control unit 152 may be in communication with electrical components of the valve actuating mechanism 218 such that force data can be derived inherently from the valve actuating mechanism 218.

In operation, and as will be discussed further herein, the control unit 152 may control the valve body 150 based on determinations made locally at the control unit 152. In yet other instances, the control unit 152 may receive instructions or operational data from the manufacturing control system 114 or the network 116. In such instances, the control unit 152 may control the valve body 150 based on the instructions and operational data received from the manufacturing control system 114 or the network 116. In addition, the control unit 152 may direct fluid (e.g., dry air) from the pneumatic input tube 224 to at least one of the one or more pneumatic output tubes 226 to move the shaft 220 and actuate the valve 106. In other instances, the control unit 152 may communicate with a motor (not illustrated) to move the shaft 220 and actuate the valve 106.

In some instances, the control unit 152 receives data from the valve actuating mechanism 218, the first sensor 228 and/or the second sensor 230 as the control unit 152 actuates the valve 106. The data may be indicative of the force required to move the shaft 220. For example, the first sensor 228 may be provided as a piezoelectric sensor coupled to the shaft 220, and/or the second sensor 230 may be provided as a pneumatic pressure sensor fluidly coupled to the pneumatic input tube 224. The piezoelectric sensor generally is reliable and robust against temperature changes and also may have a relatively small size. Moreover, the second sensor 230 may improve the safety of the valve 106, such that it may be positioned near at least one end of the shaft 220 to further facilitate safety of the valve 106. In some instances, the second sensor 230 may be a back-up to the first sensor 228 should the first sensor 228 be unable to operate as intended and/or unable to collect data. In some instances, electrical components of the valve actuating mechanism 218 may provide force data to the control unit 152.

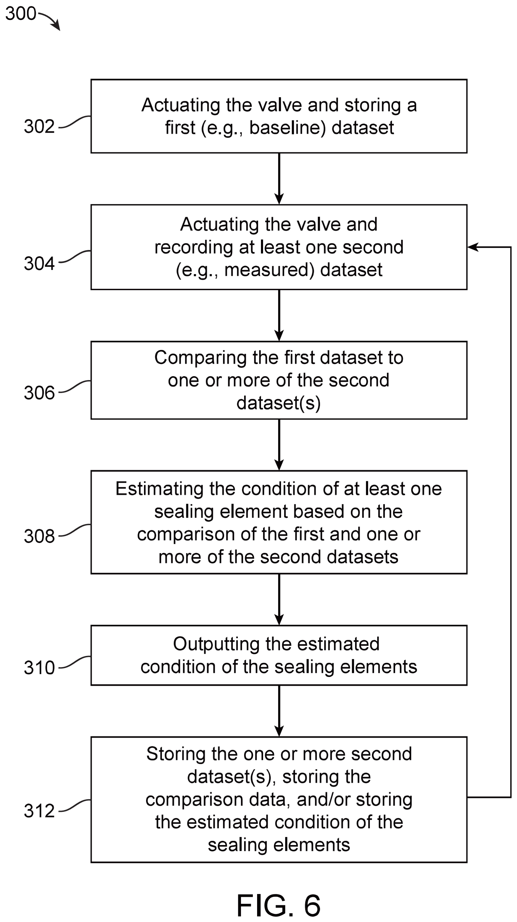

The control unit 152 may process the data as it receives it, or the control unit 152 may store the data for analysis at a later time. In other instances, the control unit 152 may transmit the data to the manufacturing control system 114 or the network 116 for storage and processing. In some instances, the data from the valve actuating mechanism 218 and/or the sensors 228, 230 may be analyzed to predict the remaining life of a plurality of sealing elements 246 (shown in FIG. 4) within the valve 106 and/or the health of the sealing elements within the valve 106 (e.g., described herein in connection with FIG. 6) and the control unit may transmit the information to the manufacturing control system 114 and/or the network 116.

Turning to FIG. 4, the fluid control mechanism 204 may be positioned within the lower housing 200 and designed to selectively control the flow of fluid through the lower housing 200. In some instances, in addition to the lower valve disc 212 and the upper valve disc 214, the lower housing 200 has a plurality of sealing elements 246. As the lower valve disc 212 and the upper valve disc 214 selectively move within the valve body 150, each of the plurality of sealing elements 246 are designed to selectively form a seal with at least one of the lower valve disc 212, the upper valve disc 214, and/or the lower housing 200 to control fluid between at least one of the first portion 206, the second portion 208, the intermediate portion 210, and/or the drainage outlet 155.

The lower valve disc 212 may allow fluid flow through the drainage outlet 155 and may selectively block fluid communication between the first portion 206 and the second portion 208 of the valve body 150. The lower valve disc 212 may be provided in the form of an elongated (e.g., cylindrical) body extending along the vertical axis 154 with a channel or drainage outlet 248 and the channel 248 extending through the lower valve disc 212 along the vertical axis 154. Moreover, the lower valve disc 212 may have an upper (e.g., y-shape) portion that is in fluid communication with the elongated body. The lower valve disc 212 may be sized and shaped to block fluid communication between the first portion 206 and the intermediate portion 210 when the lower valve disc 212 is positioned in the intermediate portion 210 of the lower housing 200. In addition, the channel 248 may selectively enable fluid flow through the drainage outlet 155.

The upper valve disc 214 is designed to selectively block fluid communication between the first portion 206 and the second portion 208 of the valve body 150 and to selectively seal the channel 248 of the lower valve disc 212. The upper valve disc 214 may be provided in the form of an elongated (e.g., cylindrical) body sized and shaped to selectively block fluid communication through the intermediate portion 210 of the lower housing 200. Furthermore, the upper valve disc 214 may be sized and shaped such that when the upper valve disc 214 is adjacent to the lower valve disc 212, the upper valve disc 214 blocks fluid from entering the channel 248.

The plurality of sealing elements 246 are designed to selectively seal portions of the lower housing 200 to control the flow of fluid through the lower housing 200. In some instances, each of the plurality of sealing elements 246 is provided in the form of a deformable body, such as a ring or a tube. For example, each of the plurality of sealing elements 246 may be provided as an O-ring, a radial seal ring, and/or a form-fit profile seal. In additional instances, each of the plurality of sealing elements 246 is provided in the form of at least one of an EPDM (Ethylene Propylene Diene Monomer), HNBR (Hydrogenated Nitrile Butadiene Rubber), FKM (Fluorine Kautschuk Material), and/or a combination thereof.

In one instance, each of the plurality of sealing elements 246 is defined by an outer diameter between about 27 mm and about 108 mm. Furthermore, each of the plurality of sealing elements 246 is imparted with a height between about 3 mm and about 26 mm. Moreover, each of the plurality of sealing elements 246 may include a wall thickness between about 3 mm and about 5 mm. It is understood that each of the plurality of sealing elements 246 may have any suitable size and/or shape.

Still referring to FIG. 4, in some instances, the plurality of sealing elements 246 may be provided in the form of a first sealing element 250, a second sealing element 252, a third sealing element 254, a fourth sealing element 256, a fifth sealing element 258, a sixth sealing element 260, a seventh sealing element 262, an eighth sealing element 264, a ninth sealing element 266, a tenth sealing element 268, an eleventh sealing element 270, a twelfth sealing element 272, and a thirteenth sealing element 274. As mentioned herein, there may be any suitable number of sealing elements 246. Some sealing elements 246 experience compression and decompression during operation, while other sealing elements 246, as discussed herein, only experience compression during assembly.

The first sealing element 250 is designed to engage the lower valve disc 212 to provide a seal for the leakage in the environment. In particular, the first sealing element 250 may be positioned and located at the drainage outlet 248 and may substantially circumscribe the lower valve disc 212. The first sealing element 250 may prevent fluid from leaking out of the drainage outlet 248 as the lower valve disc 212 is moved. In some instances, friction may be generated when the lower valve disc 212 is moved, which may result in wear of the first sealing element 250 after repeated use. By selectively moving the lower valve disc 212 down, the seal 252 will allow the flow of fluid from the first portion 206, past the seal 252, through the hollow lower valve disc 212, and into the drainage outlet 248.

The second sealing element 252 is designed to engage the intermediate portion 210 of the lower housing 200 to selectively block fluid communication between the intermediate portion 210 and the first portion 206 of the lower housing 200. In some instances, the second sealing element 252 may be coupled to and substantially circumscribe the lower valve disc 212. In such instances, the second sealing element 252 may be engaged when the lower valve disc 212 is moved into or toward the intermediate portion 210 of the lower housing 200. In some instances, the second sealing element 252 may wear over time or during repeated use when engaging or disengaging with the intermediate portion 210 due to friction.

The third sealing element 254 and the fourth sealing element 256 are designed to engage the intermediate portion 210 of the lower housing 200 to selectively block fluid communication between the second portion 208 and the intermediate portion 210 of the lower housing 200. In some instances, the third sealing element 254 and the fourth sealing element 256 may be coupled to and substantially circumscribe the upper valve disc 214. The third sealing element 254 and the fourth sealing element 256 may be engaged by moving the upper valve disc 214 into the intermediate portion 210 of the lower housing 200. The third sealing element 254 and the fourth sealing element 256 may wear over time or during repeated use when engaging or disengaging with the intermediate portion 210 due to friction.

The fifth sealing element 258 is designed to engage the upper valve disc 214 of the lower housing 200 to block fluid from leaking out of the second portion 208. For example, the fifth sealing element 258 may prevent fluid from leaking out of the valve body 150 and into the upper housing 202. In some instances, the fifth sealing element 258 may be positioned at an interface between the lower housing 200 and the upper housing 202. In addition, the upper valve disc 214 may be selectively moveable within the fifth sealing element 258. Friction may be generated when the upper valve disc 214 is moved within the fifth sealing element 258 resulting in wear of the fifth sealing element 258 after repeated use.

The sixth sealing element 260, the seventh sealing element 262, the eighth sealing element 264, the ninth sealing element 266, the tenth sealing element 268, the eleventh sealing element 270, the twelfth sealing element 272, and the thirteenth sealing element 274 are designed to seal additional portions of the valve 106. In some instances, the sealing elements 260, 262, 266, 270, and/or 274 are substantially stationary during operation (e.g., the sealing elements are not cyclically compressed and decompressed during operation but rather are compressed once during assembly of the valve 106), and the sealing elements 264, 268 and/or 272 can experience wear due to friction when the fluid control mechanism 204 is actuated (e.g., the compression on the sealing elements is substantially constant during operation and are not substantially stationary during operation). For example, the sixth sealing element 260 may be designed to seal the lower housing 200 to the environment. The seventh sealing element 262 may be designed to block an interface between the shaft 220 and the lower valve disc 212. The eighth sealing element 264 may be designed to block an interface between the shaft 220 and the upper valve disc 214. The ninth sealing element 266 may be designed to block the lower housing 200 to the environment. The tenth sealing element 268, the eleventh sealing element 270, and the twelfth sealing element 272 may be designed to block interfaces between the upper valve disc 214 and the shaft 220 within the upper housing 202. The thirteenth sealing element 274 may be designed to block a portion of the upper housing 202.

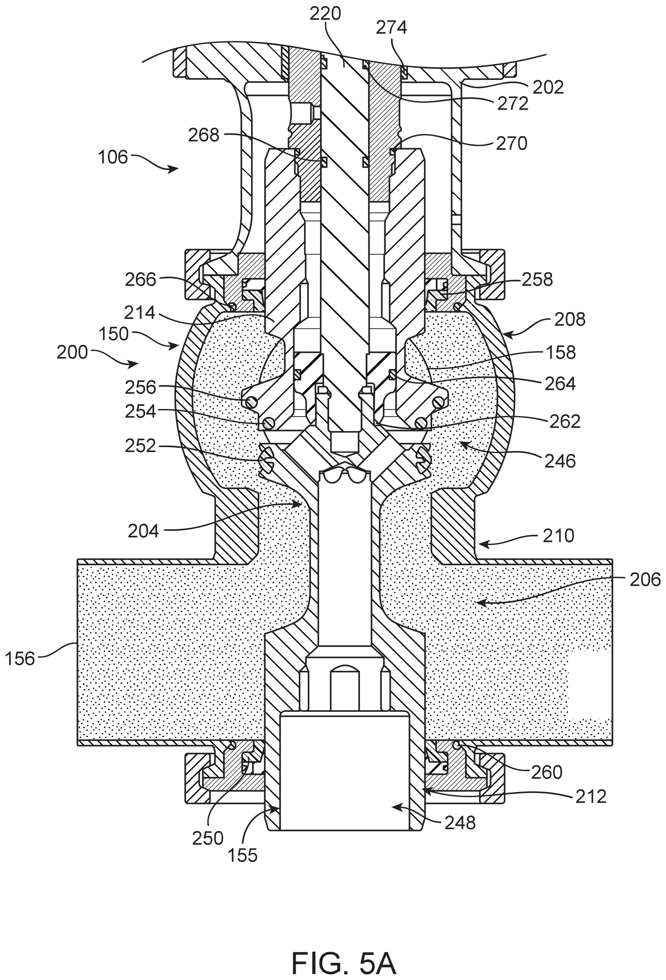

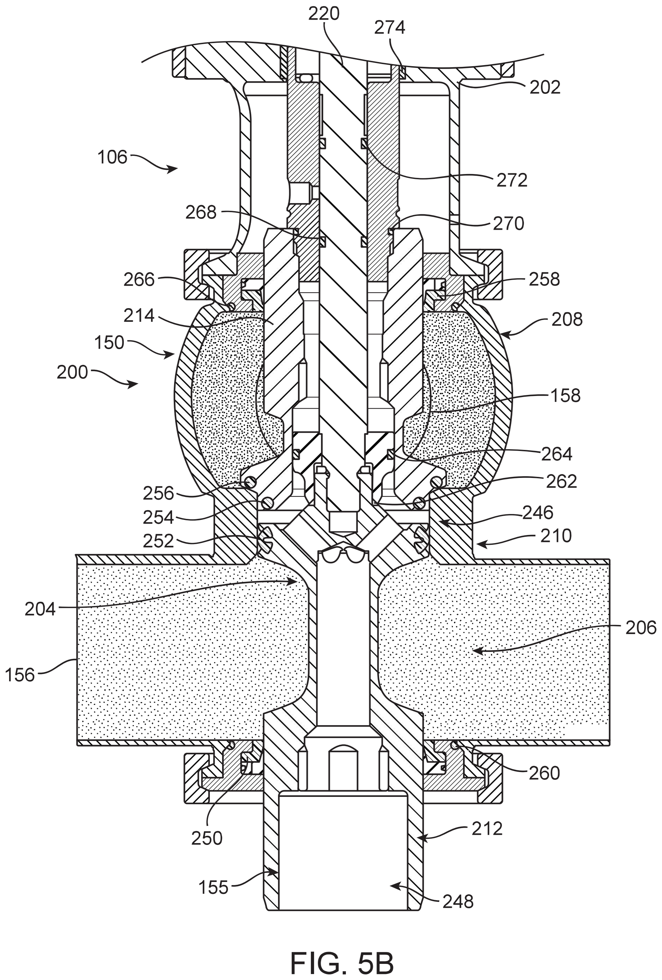

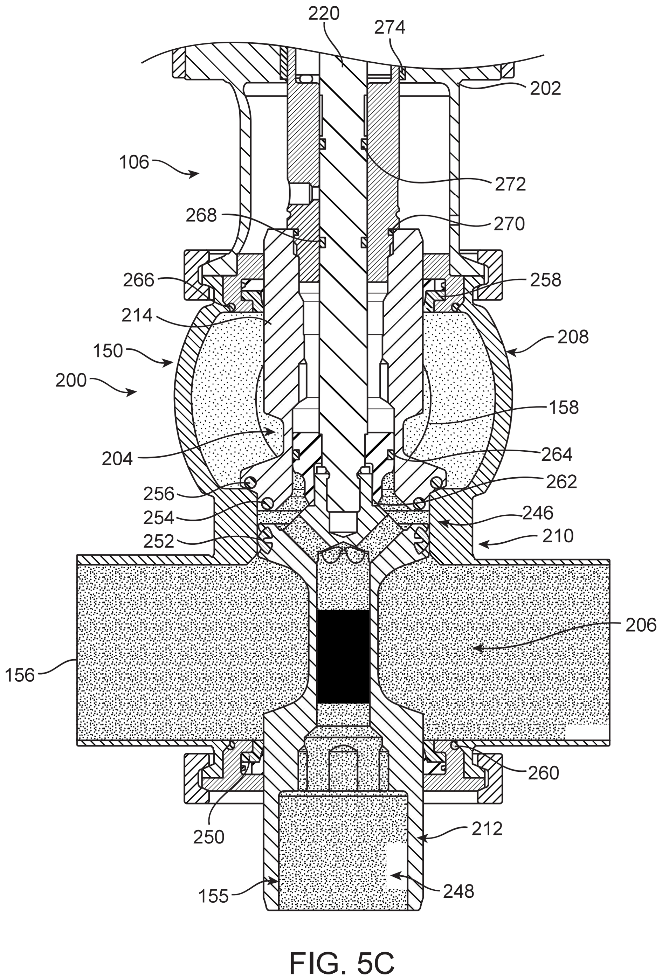

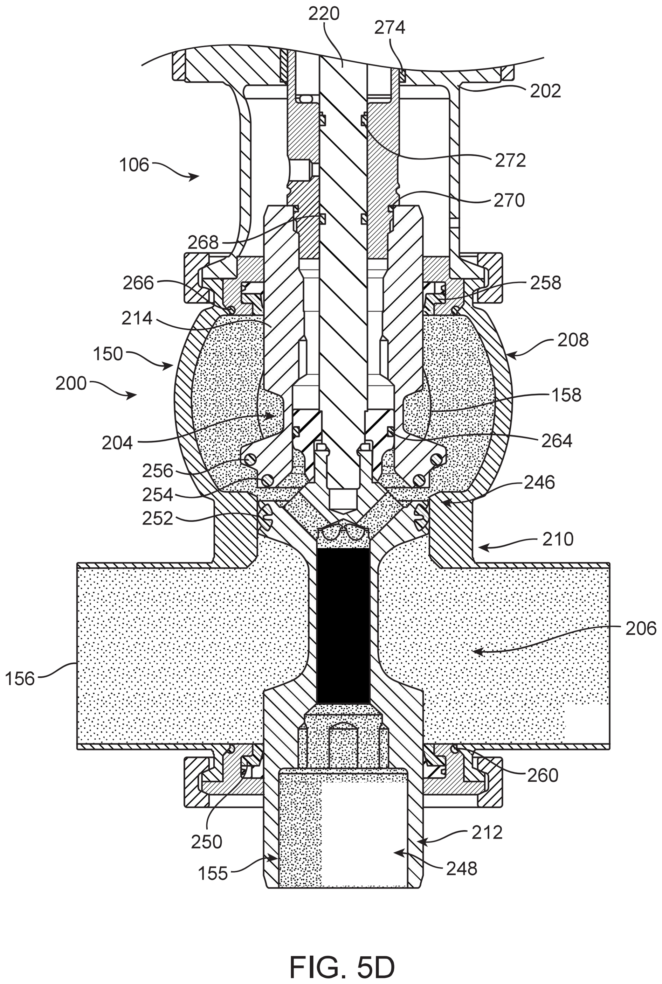

Turning to FIGS. 5A-5D, when the valve 106 is in use, the fluid control mechanism 204 may be selectively actuated to place the valve 106 in either of a first configuration (see FIG. 5A), a second configuration (see FIG. 5B), a third configuration (see FIG. 5C), or a fourth configuration (see FIG. 5D). In other instances, the valve 106 may include more or fewer configurations. The various configurations discussed herein provide examples of how fluid(s) may flow through the valve 106 and, in particular, may flow through the lower housing 200 of the valve 106.

FIG. 5A illustrates the lower housing 200 of the valve 106 in a first configuration or a substantially open configuration. In the first configuration, the fluid control mechanism 204 is designed to allow fluid communication between the first portion 206 and the second portion 208 of the lower housing 200. Thus, fluid may enter the valve 106 through the first conduit 156 and may leave the valve body 150 though the second conduit 158. In some instances of the first configuration, the upper valve disc 214 may be positioned and located above the intermediate portion 210 forming a gap between the upper valve disc 214 and the intermediate portion 210. In addition, the lower valve disc 212 may be positioned such that the second sealing element 252 is separated from the intermediate portion 210 when the valve 106 is in the first configuration. Thus, fluid communication may be established between the first portion 206 and the second portion 208 of the lower housing 200 when the valve 106 is in the first configuration.

FIG. 5B illustrates the lower housing 200 of the valve 106 in the second configuration or a substantially closed configuration. In the second configuration, the fluid control mechanism 204 is designed to substantially prevent or block fluid communication between the first portion 206 and the second portion 208 of the lower housing 200. As a result, fluid from the first conduit 156 and the second conduit 158 may pass through and/or into the valve body 150 separately when the valve 106 is in the second configuration. In other words, fluid from the first conduit 156 and the second conduit 158 do not mix together within the valve body 150 when the valve 106 is in the second configuration. In some instances, the valve 106 may be placed in the second configuration by moving the lower valve disc 212 and the upper valve disc 214 such that the second sealing element 252, the third sealing element 254, and the fourth sealing element 256 are in contact with or positioned substantially adjacent to the intermediate portion 210 to substantially prevent fluid from flowing between the intermediate portion 210 and the first portion 206.

FIG. 5C illustrates the valve 106 in a third configuration or a lower draining configuration. In the third configuration, the fluid control mechanism 204 is designed to allow fluid communication between the first portion 206 and the channel 248. As a result, fluid from the first conduit 156 may flow into the valve body 150, and the channel 248 may guide the fluid to the drainage outlet 155 when the valve 106 is in the third configuration. In some instances, fluid from the intermediate portion 210 may also flow through the drainage outlet 155 when the valve 106 is in the third configuration. To place the valve 106 in the third configuration, the upper valve disc 214 may be moved such that the third sealing element 254 and the fourth sealing element 256 are placed in contact with or substantially adjacent to the intermediate portion 210 of the lower housing 200. Thus, fluid communication may be substantially or entirely blocked between the second portion 208 and the intermediate portion 210 when the valve 106 is in the third configuration. In addition, the lower valve disc 212 may be positioned such that the second sealing element 252 is positioned within the intermediate portion 210 and/or the first portion 206. As a result, fluid from the intermediate portion 210 or the first portion 206 may enter the channel 248 and exit the valve 106 through the drainage outlet 155 when the valve 106 is in the third configuration.

FIG. 5D illustrates the valve 106 in a fourth configuration or an upper draining configuration. In the fourth configuration, the fluid control mechanism 204 is designed to allow fluid communication between the second portion 208 and the channel 248. As a result, fluid from the second conduit 158 may enter the valve body 150 and flow into the channel 248 before exiting through the drainage outlet 155 when the valve 106 is in the fourth configuration. To place the valve 106 in the fourth configuration, the lower valve disc 212 may be moved such that the second sealing element 252 is placed in contact with or substantially adjacent to the intermediate portion 210 of the lower housing 200. Thus, fluid communication may be substantially or entirely blocked between the first portion 206 and the intermediate portion 210 when the valve 106 is in the fourth configuration. In addition, the upper valve disc 214 may be positioned and located away from the intermediate portion 210 and the lower valve disc 212. As a result, fluid from the second conduit 158 may enter the channel 248 and exit the valve 106 through the drainage outlet 155 when the valve 106 is in the fourth configuration.

As illustrated in FIG. 6, a method 300 for actuating the valve 106 and evaluating the condition of one or more of the plurality of sealing elements 246 of the valve 106 is provided. The method 300 facilitates accurately determining the type of seal (e.g., recognizing the material of the seal) and evaluating the condition of the at least one sealing element 246 of the valve 106, which prevents the valve 106 from requiring disassembly to inspect the condition of the sealing elements 246, which saves time and money by not rendering the valve 106 inoperable for a period of time. In some instances, this type of predictive maintenance may reduce downtime of the environment 100 and/or the valve 106 by about 30 percent to about 50 percent and may increase the life of the environment 100 and/or the valve 106 by about 20 percent to about 40 percent.

As an overview, in one instance, the method 300 for evaluating a condition of at least one sealing element of a valve (e.g., the valve 106, or another valve type as discussed above) is disclosed. The operation of the valve consists of actuating (e.g., opening and closing) the valve. A dataset (e.g., as friction or force over time) is measured and recorded for each instance that the valve is opened and closed. In one instance, the dataset can be measured when at least one sealing element is (e.g., newly) installed in the valve or when one or more valves are (e.g., newly) installed in a fluid processing environment. The controller (e.g., the controller 115) can detect the time for the valve to open and close, called cycle-time, and can automatically adjust the time (e.g., the length of time or the period of time) that the data is recorded (e.g., depending on the type of valve and/or the material of the valve). The valve is opened and closed (e.g., numerous times) and one or more initial datasets, or dataset values, are (e.g., continually) measured and recorded. In one instance, the valve is opened and closed until the initial dataset or dataset values are stable (e.g., the variation of the dataset values is not larger than a predetermined value). The time until the initial datasets are stable, or are not larger than the predetermined value, is the run-in time. The initial datasets and/or the run-in time and/or the cycle-time can be different for each (e.g., type of) valve. In one instance, the initial dataset and/or the run-in time is measured after assembly and/or installation of a new valve or new valves or a new seal. After the initial dataset values are stable, the initial dataset values are recorded and/or stored as a first (e.g., baseline) dataset. The run-in time for the first dataset (e.g., the baseline dataset) can also be recorded and/or stored for later reference, and further the cycle-time for the first dataset can be recorded and/or stored for later reference.

Continuing with the overview, the method 300 also can include actuating (e.g., opening and closing) the valve over a second cycle-time period, recording a second dataset, and/or storing the second dataset of measured values of the at least one sealing element. The first dataset and the second dataset can be compared to determine whether a shift or a change has occurred between the first dataset and the second dataset, estimating a condition of the at least one sealing element based on the shift or the change, and outputting the condition of the at least one sealing element.

More specifically, the method 300 may evaluate the condition of one or more sealing elements 246 (e.g., the first, second, third, fourth, and fifth sealing elements 250, 252, 254, 256, 258). In other instances, the method 300 may evaluate the condition of less, or more, sealing elements 246. In yet other instances, the method 300 may evaluate the condition of sealing elements within a different type of valve (e.g., a ball valve, a butterfly valve, a globe valve). In yet another instance, the method 300 may determine the remaining lifetime of at least one sealing element 246.

In some instances, the method 300 may be performed by the control unit 152. In other instances, the method 300 may be performed by one or more of the manufacturing control system 114, the central controller 115, and/or the network 116. In one instance, data collected from method 300 may be stored by the control unit 152, the central controller 115, and/or the network 116, wherein the data may be communicated to a third party or into the cloud or used to iteratively train artificial intelligence models. Moreover, the method 300 may be performed by a third-party server or cloud network.

In at least one embodiment, the system 114 may determine the condition of the one or more sealing elements 246 and/or develop a prediction related to the sealing element 246 based on one or more data inputs or features analyzed by the system 114. For example, the system 114 may determine a predicted failure or a predicted remaining lifetime based on comparing datasets and/or based on operating conditions (e.g., the magnitude of the force or friction measurement values and/or the time the valve has been in use), and/or the system may generate a preventative maintenance schedule based on comparing datasets (e.g., considering the symmetry, peaks, valleys, shifts, and/or curvature of the datasets) collected and processed by the system. In some forms, the system 114 may train an artificial intelligence model based on datasets related to the condition of the sealing element 246, operating parameter/conditions data, or a combination thereof. The system 114 may further be configured to adjust weights and/or emphasis guidelines based on the accuracy of the model predicting failure or developing preventative maintenance recommendations. In some aspects, the artificial intelligence model can be provided in the form of one or more of machine learning, neural networks, deep learning, computer vision, decision trees, vector quantization, gradient boosting algorithms, mutual information classifiers, random forest classifications, and other artificial intelligence models or advanced data processing techniques.

As shown in FIG. 6, more specifically, the method 300 may include a step 302 of actuating the valve 106 (e.g., with a controller) and analyzing one or more datasets. When actuating the valve 106, the initial (e.g., baseline) datasets, described hereinabove, are (e.g., continually, or repeatedly) measured and analyzed until the datasets are substantially consistent (e.g., and/or a cycle-time and/or a run-in time is established), such that the datasets do not substantially deviate from one another. Once the initial datasets are determined to be stable, one or more first (e.g., baseline) datasets are stored and/or recorded as the base line measurement.

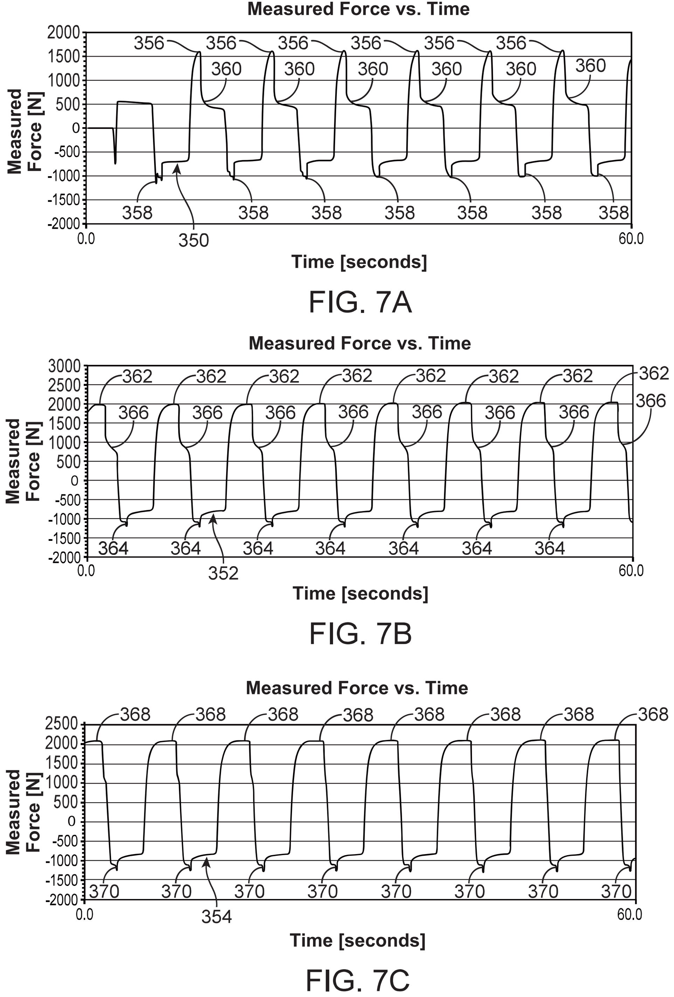

In some instances, the valve may be actuated one or more times (e.g., between the opened configuration and the closed configuration) to determine the (e.g., initial measured) values, such as force or friction, experienced by at least one sealing element 246 when actuating the valve 106 one or more times (see, e.g., FIGS. 7A-7C) over a full opening or closing stroke of the valve 106. The values of force and/or friction are measured over a full opening or closing stroke of the valve 106 for a first time period or a first cycle-time (e.g., about 60 seconds). For example, the seal data may be received from a piezoelectric sensor (such as the first sensor 228) coupled to a shaft or a pneumatic sensor (such as the second sensor 230) coupled to a pneumatic tube. In some instances, the seal data may be received from electrical components of the valve actuating mechanism 218. In other instances, the first dataset may indicate the force measured over a range of position values associated with the shaft (e.g., expressed in millimeters of shaft displacement). Moreover, the first dataset does not rely on any generalized data (e.g., friction or force data) or (e.g., predefined) threshold (e.g., force or pattern) values. Step 302 also can include storing the first (e.g., baseline) dataset.

The method 300 may also include a step 304 of actuating (e.g., over a full opening and/or closing stroke of) the valve 106 and recording at least one second dataset (e.g., a new measured dataset). In some instances, the second dataset may indicate the force and/or friction values experienced by at least one sealing element of the plurality of sealing elements 246 when actuating the valve 106. In some such instances, the second dataset may include the force or friction measured over a second time period (e.g., that is the same duration as the first time period) (see, e.g., FIG. 7B) or a second cycle-time period (e.g., that can be the same duration as the first cycle-time). In other instances, the second dataset may include force measurement values recorded over the range of position values associated with the shaft (e.g., expressed in millimeters of shaft displacement). Moreover, the method 300 may be repeated at various cycle-times to collect one or more second datasets for comparison to the first dataset. The comparison can disclose an evolution of the wear of a sealing element.

The method 300 may further include a step 306 of comparing the first dataset to one or more of the second dataset(s). In some instances, the step 306 of comparing the first dataset to one or more second datasets may include comparing the datasets to detect if the dataset has changed. When comparing the first dataset to the one or more second datasets, the change (or lack thereof) in the shape of the curves and the change (or lack thereof) in the magnitude of the force or friction measurement values can be considered. For example, the step 306 of comparing the first dataset to the one or more second datasets may include comparing or analyzing the force measurement values (over one or more predetermined number of strokes) to determine if the pattern (e.g., data plot) of the force measurement values has changed between the first dataset and the one or more second datasets. In some such instances, the step 306 may include determining whether the graph for the first dataset is different than the graph(s) for the one or more second datasets (e.g., see FIGS. 7A-7C). In one instance, the step 306 may include comparing at least one of the symmetry, peaks, valleys, shifts, and/or curvature of the graph of the first dataset to the symmetry, peaks, valleys, shifts, and/or curvature of the graph of the one or more second datasets.

The condition of the sealing elements can be estimated at a step 308 by comparing one or more of the second datasets to the first dataset.

In some instances, the step 308 of estimating the condition of the sealing elements can include determining whether the magnitude of the values of the datasets has changed by more or less than a threshold force value. In one instance, the step 308 of estimating the condition of the sealing elements may include determining whether a pattern of the graph has changed (e.g., the graph shape has changed between FIGS. 7A-7C considering the graph symmetry, peaks, valleys, shifts, and/or curvature of the graphs).

When the graph for the second dataset is different than the graph(s) for the first dataset, the condition of at least one sealing element has changed. Any change in the dataset can indicate wear of the at least one sealing element. The change or difference in the dataset, along with the indication of wear, can be stored for later reference or further analysis. If there is no change in the dataset, there may be an indication of no change to the condition of the at least one sealing element and can also be stored for later reference or further analysis.

Once a determination of change has been made between at least one first dataset and at least one second dataset, then a predetermined set of classes is used to determine the state of at least one sealing element (e.g., the sealing element 264 and/or the sealing element 272) of the valve 106. Each predetermined class is reflective of the state of the seal. In one instance, the predetermined set of classes includes the classes of healthy 410 (e.g., the sealing does not have wear and should not be replaced), degrading 420 (e.g., the sealing element has wear and may need replacement in the future), critical 430 (e.g., the sealing element is worn and is nearing replacement or imminent failure), and/or failed 440 (e.g., the sealing element is substantially worn and should be replaced).

Each predetermined class can be associated with a predetermined or known class graph (not shown) having at least one curve (e.g., the curve having a shape). The analysis and determination of the state of the seal, and which class of the predetermined set of classes the sealing element falls into, can be based on a comparison of at least one second dataset(s) to the predetermined class graphs. This comparison can include comparing at least one curve of the second dataset(s) to the curves of the predetermined graph. When at least one curve of the second dataset substantially matches (e.g., follows a similar curvature or aligns with) one of the predetermined class graphs, the second dataset is then determined to fall within the class associated with the predetermined class graph. This comparison uses pattern recognition, rather than a simple threshold, to classify the state of the sealing element of the valve 106. Moreover, the predetermined class graph can change based on the type of valve. Once the class is identified, then a determination of the health of the sealing element can be made. For example, if the class identified is the degrading class, the sealing element likely has wear but is still preventing leaks and has not yet failed and further does not yet need replacement.

In other instances, the step 308 of estimating the condition of the sealing elements may include one or more of estimating the remaining life of the sealing elements, the health of the sealing elements, or the wear of the sealing elements. In such instances, the condition of one or more of the sealing elements may be estimated by determining the extent of the change between the first dataset and the one or more second datasets.

In further instances, the step 308 of estimating the condition of the sealing elements based on the comparison includes using one or more algorithms. For example, an algorithm for graph (e.g., shape or pattern) recognition (e.g., recognizing the symmetry, peaks, valleys, shifts, and/or curvature of the dataset graphs) including machine learning capabilities is used. In other instances, an algorithm for trend extrapolation or an algorithm to forecast the failure of a valve may be used. Furthermore, in additional instances, the method 300 uses iteratively trained or artificial intelligence models, as described herein above, having machine learning algorithms enabling the method 300 to constantly "learn" (e.g., particularly after a new seal has been installed and a new baseline needs to be established) and become more accurate in forecasting the health of at least one sealing element as the valve or the system operates.

The method 300 may further include a step 310 of outputting the estimated condition of the sealing elements. In some instances, the step 310 of outputting the estimated condition of the sealing elements may include displaying the condition of the sealing elements on the user device or display 118 in communication with the control unit 152, the manufacturing control system 114, and/or the network 116. In some other instances, the condition of the sealing elements may be sent as an alert to the user (e.g., via an email or SMS message). In such instances, the alerts may be sent in real time, or the alerts may be sent according to a schedule (e.g., on a daily, weekly, or monthly basis). In other instances, the step 310 of outputting the estimated condition of the sealing elements may include disabling the valve if one or more of the sealing elements are determined to be worn or near the point of failure. Is some forms, valve disablement is performed automatically upon a determination of near failure.

The method 300 also may include a step 312 of storing the one or more first and/or second dataset(s) (e.g., to use for comparison later), storing the comparison data, and/or storing the estimated condition of one or more of the sealing elements. In some instances, the one or more second dataset(s) and the estimated condition of the sealing elements may be stored in a memory (not shown) of the control unit 152, the controller 115, the manufacturing control system 114, and/or the network 116. Thus, a user may access historical or previously measured information (e.g., the first dataset and the one or more second dataset(s)) and/or the estimated condition of the sealing elements. For example, the user may review or retrieve the collected and stored information regarding the condition of the seal and/or the first and/or second dataset(s) from a prior time period (e.g., last week) for comparison to information to collected and stored more recently (e.g., today). In addition, the one or more second dataset(s) may be stored for subsequent iterations of the method 300. Thus, in subsequent iterations of the method 300, the control unit 152 may compare the stored first dataset and/or one or more second dataset(s) for determination of the condition of at least one seal.

Turning to FIGS. 7A-7C, examples of measured or simulated datasets collected while actuating a valve (e.g., the valve 106 described in connection with FIGS. 2-4) are depicted. In particular, FIG. 7A illustrates a first dataset 350 (e.g., a baseline dataset), FIG. 7B illustrates a second measured dataset 352 (e.g., at a time after the first dataset 350 was measured), and FIG. 7C illustrates a third measured dataset 354 (e.g., at a time after the first and/or the second datasets were measured). Each of second measured dataset 352, shown in FIG. 7B, and the third measured dataset 352, shown in FIG. 7C, illustrates a set of several full cycles (e.g., the valve 106 actuating several times from an open position to a closed position). The first dataset 350 and the second and third measured datasets 352, 354 may be used to estimate the condition of the one or more sealing elements 246 within the valve 106 (e.g., as described in connection with FIG. 6). As discussed herein, each peak 356 corresponds to a fully closed position, whereas each valley 358 represents a fully open position. A full cycle corresponds to the data from one peak 356 (or valley 358) to the next peak 356 (or valley 358).

In some instances, the datasets 350, 352, 354 each include a collection of (e.g., force) measurement values (e.g., measured in Newtons) collected while actuating the valve 106 one or more times from a substantially open position to a substantially closed position over a cycle-time (e.g., measured in seconds). For example, each of the datasets 350, 352, 354 in FIGS. 7A-7C corresponds to the valve 106 being actuated between an open configuration and a closed configuration over a time period of about 60 seconds. In other instances, the valve 106 may be actuated between other configurations. Also, in some instances, the valve may be actuated a plurality of times. Accordingly, the datasets 350, 352, 354 may be plotted on a graph of Measured Force [Newtons] vs. Time [Seconds], as illustrated in FIGS. 7A-7C.

As discussed in more detail herein, the datasets 350, 352, 354 may show absolute values of the "peaks" (e.g., maximum force values 356, 362, 368) to be substantially similar but the plot of each measured dataset may vary substantially. Thus, it may be useful to record and store each measured dataset, including a baseline (e.g., first) measured dataset, along with a forecasting algorithm (e.g., stored in the controller 152) to facilitate extrapolating the graph of the measured dataset and/or the changes in the graph of the measured dataset(s). The datasets (e.g., the curvature or curve patterns of the datasets) may facilitate the determination of an indication of wear or possible failure of the at least one sealing element 246 and may indicate when the at least one sealing element 246 needs to be replaced. Different types of valves may have different measured datasets of force, and therefore, the respective graph of the measured dataset may vary based on the type of valve. As discussed herein, the changes in the curve pattern (e.g., peaks, curvatures, and other curve points) of the dataset can be indications of the failure process of at least one sealing element. The graphs of FIGS. 7A-7C illustrate not only the importance of the peak values, but also the importance of the curve patterns, which change significantly from the time the at least one sealing element is installed to the time when the at least one sealing element shows wear.

FIG. 7A illustrates the first dataset 350 plotted on a graph of Measured Force [Newtons] vs. Time [Seconds]. The first dataset 350 represents one or more force measurement values recorded over a first time period or first cycle-time (e.g., time between the open and closed position). In some instances, the first dataset may be measured (e.g., or recorded) directly (e.g., immediately) after the valve 106 is first powered on or occurring directly after the valve 106 is installed and/or the plurality of sealing elements 246 are replaced.

For example, the measured force values in the first dataset 350 may vary between a peak 356 (e.g., that can be a first plurality of maximum force values) and a valley 358 (e.g., that can be a first plurality of minimum force values). In one instance, each peak 356 corresponds to the valve 106 in a substantially closed position, and each valley 358 corresponds to the valve 106 in a substantially open position. A full cycle of the valve 106 opening and closing can be represented by the data on the graph from one peak 356 to one valley 358. In other instances, a full cycle of the valve 106 can be represented by the data (e.g., the curvature) on the graph (e.g., the curvature) from one peak 356 to the next (e.g., subsequent) corresponding peak 356 (e.g., at a time after the prior peak) or from one valley 358 to the next (e.g., subsequent) corresponding valley 358 (e.g., at a time after the prior valley). In other words, the first plurality of maximum force values 356 occur when the valve has been placed in one of the configurations (e.g., the opened configuration), and the first plurality of minimum force values 358 occur when the valve has been placed in another configuration (e.g., the closed configuration). In addition, a first plurality of inflection point values 360 may be measured between the first plurality of maximum force values 356 and the first plurality of minimum force values 358. The inflection point values 360 are a part of the curvature of the graph, and the curvature of the graph provides guidance when determining the condition of at least one sealing element within the valve 106.

FIG. 7B illustrates the second measured dataset 352. Similar to the first dataset 350, the second measured dataset 352 may be a collection of force measurement values recorded during a second time period or a second cycle-time. In one instance, the first cycle-time and the second cycle-time are substantially the same (e.g., a 60-second time period). Also, in one instance, the second cycle-time may be a period of time occurring after the first cycle-time. In some such instances, the second cycle-time may occur directly after the first cycle-time, or the second cycle-time may occur between a few minutes (e.g., about 3 minutes and about 5 minutes) after the first cycle-time, or the second cycle-time may be a few hours (e.g., about 3 hours to about 5 hours) after the first cycle-time, or the second cycle-time may be a day or a few days (e.g., about 24 hours to about 5 days) after the first cycle-time, or the second cycle-time may be a few weeks (e.g., about 3 weeks to about 5 weeks) after the first cycle-time.

As illustrated, the force measurement values in the second measured dataset 352 range between a second plurality of maximum force values 362 and a second plurality of minimum force values 364. However, in contrast to the first dataset 350, the second plurality of maximum force values 362 may be different than the first plurality of maximum force values 356. In addition, the second plurality of minimum force values 364 may be different than the first plurality of minimum force values 358. Accordingly, as shown in FIGS. 7A and 7B, the second measured dataset 352 is shifted or different as compared to the first dataset 350. The comparison of the curvature of the graphs is indicative of the health of at least one sealing element.

Furthermore, the second measured dataset 352 includes a second plurality of inflection point values 366 positioned and located between the second plurality of maximum force values 362 and the second plurality of minimum force values 364. However, the second plurality of inflection point values 366 may be different (e.g., have less curvature) than the first plurality of inflection point values 360. In particular, the slope of the graph of the second measured dataset 352 at the second plurality of inflection point values 366 may be steeper than the slope of the graph of the first dataset 350 at the first plurality of inflection point values 360. In addition, the second plurality of maximum force values 362 may be different (e.g., have more curvature) than the first plurality of maximum force values 356. In particular, the graph of the second measured dataset 352 at the second plurality of maximum force values 362 may have a narrow shape, while the graph of the first dataset 350 at the first plurality of maximum force values 356 may have a wide shape. One or more of the differences (e.g., change in the curvature of the dataset graph) indicate a change in the dataset, which in turn can indicate a change in the condition of the at least one sealing element. Since the second measured dataset 352 is different than the first dataset 350, there may be an indication of wear on at least one sealing element.

FIG. 7C illustrates the third measured dataset 354. Similar to the first dataset 350 and the second measured dataset 352, the third measured dataset 354 may be a collection of force measurement values recorded during a third time period. In one instance, the third time period may be substantially the same as at least one of the first time period and the second time period (e.g., a 60-second time period). In some instances, the third time period may occur after the first time period or the first cycle-time and/or the second time period or the second cycle-time.

As illustrated in FIG. 7C, the force measurement values in the third measured dataset 354 may range between a third plurality of maximum force values 368 and a third plurality of minimum force values 370. Further, the third measured dataset 354 can be measured over a third cycle-time, which may be the same or different than the first cycle-time and/or second cycle-time. However, in contrast to the first dataset 350 and/or the second measured dataset 352, the third plurality of maximum force values 368 may be different than the first plurality of maximum force values 356 and the second plurality of maximum force values 362. Similarly, the third plurality of minimum force values 370 may be different than the first plurality of minimum force values 358 and the second plurality of minimum force values 364. Thus, the third measured dataset 354 may be shifted or different when compared to the first dataset 350 and/or the second measured dataset 352. In further contrast to the first dataset 350 and the second measured dataset 352, the third measured dataset 354 may include a generally linear pattern of force measurement values between the third plurality of maximum force values 368 and the third plurality of minimum force values 370. Therefore, because the third measured dataset 354 indicates differences when compared to the first dataset 350 and/or differences when compared to the second dataset 352 (e.g., the third dataset 354 does not include a plurality of inflection points, such as inflection point values 360 and/or 366), the second dataset 352 and/or the third dataset 354 may indicate that at least one sealing element 246 is wearing or is worn and may be approaching a time to repair or replace the at least one sealing element 246.

In some instances, the first dataset 350, the second measured dataset 352, and the third measured dataset 354 may be used with the method 300 described in connection with FIG. 6. In such instances, the one or more sealing elements may be estimated to be at the point of failure or near the point of failure when comparing the second measured dataset 352 to the first dataset 350 or when comparing the third measured dataset 354 to the first dataset 350 and the second measured dataset 352. However, in other instances, the sealing elements may be estimated to be in satisfactory condition.

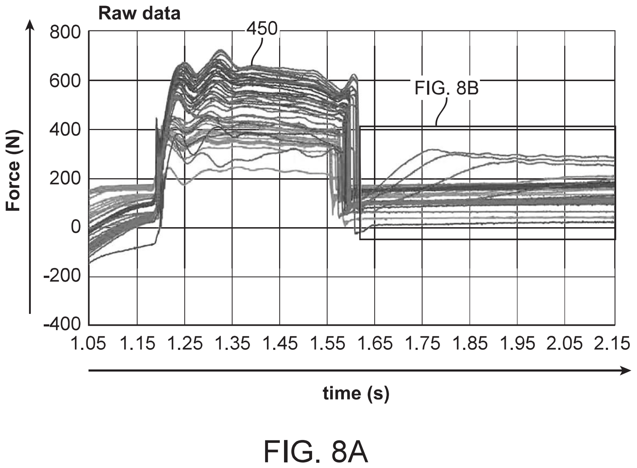

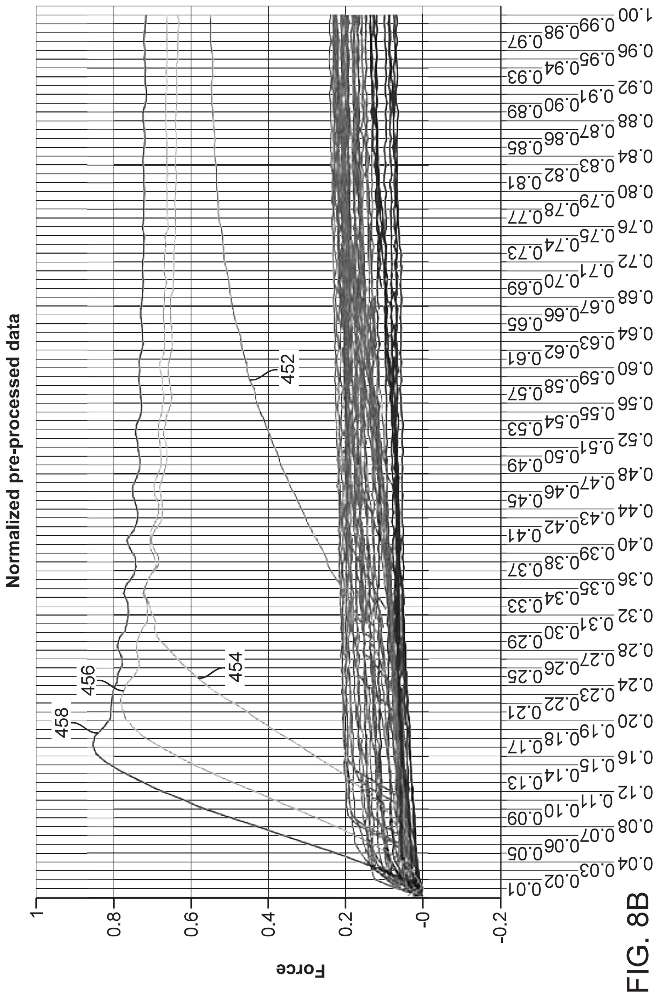

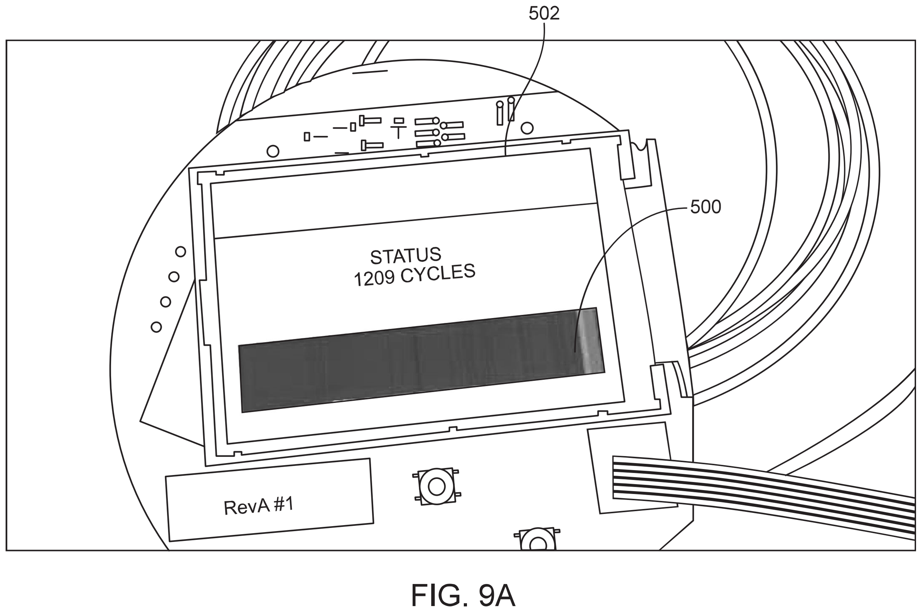

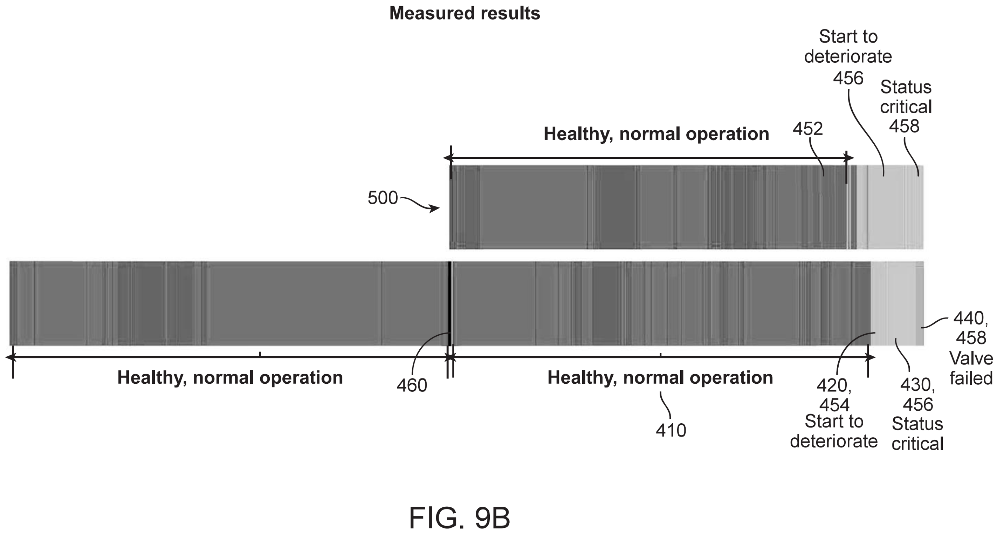

The shift or a change in the measured dataset(s) can indicate wearing of one or more of the sealing elements (e.g., may indicate performance issues) or wearing or can indicate one or more of the sealing elements are at or near a point of failure (e.g., the remaining lifetime). In other words, the shift or change can indicate the health of at least one sealing element. However, depending on other factors, one or more of the sealing elements may be estimated to be in satisfactory condition. The datasets, the comparison of the datasets, and/or the estimated condition of the sealing element may be stored and/or analyzed by the controller 115. FIGS. 8A and 8B are measured datasets (e.g., for illustrative purposes) collected while actuating a valve (e.g., the valve 106 described in connection with FIGS. 2-4). FIG. 8A illustrates a plurality of datasets 450 of force measured over time. The datasets 450 can include one or more of the datasets 350, 352, and/or 354. FIG. 8B is an enlarged view of a portion of the plurality of datasets of FIG. 8A that are normalized and includes a second measured dataset 452, a third measured dataset 454, a fourth measured dataset 456, and/or a fifth measured dataset 458. Each dataset 452, 454, 456, and/or 458 represents an actuation of a valve between an open position and a closed position. It is noted that the shape of each dataset 452, 454, 456, and/or 458 varies and further each dataset 452, 454, 456, and/or 458 is shifted with respect to each of the other datasets. This shift is indicative of wear of at least one sealing element of the valve. Each dataset 452, 454, 456, and 458 represents at least one predetermined class, as shown in FIGS. 9A and 9B, and each shade of greyscale is reflective of the state of the seal. In one instance, the predetermined set of classes includes the classes of healthy or normal 410 (e.g., the sealing does not have wear and should not be replaced) shown in dark grey, degrading or starting to deteriorate 420 (e.g., the sealing element has wear and may need replacement in the future) shown in light grey, critical 430 (e.g., the sealing element is worn and is nearing replacement or imminent failure) shown in lighter grey, and/or failed 440 (e.g., the sealing element is substantially worn and should be replaced) shown in standard grey. In some forms, the datasets shown in FIGS. 9A and 9B are provided in color rather than greyscale.

FIG. 9A is an output 500 (e.g., for illustrative purposes) on a display 502. The display 502 can be the user device 118. Data analytics can be applied to (e.g., process) the measured and/or normalized datasets 452, 454, 456, and/or 458 to create the output 500, also shown in FIG. 9B. The output 500 has multiple sections depicting the datasets 452, 454, 456, and/or 458. A user can then look at the output 500 to assess the wear of at least one sealing element based on the color associated with each predetermined class. In some forms, the output 500 shows bands of colors rather than greyscale. For example, a user can look at dataset 454 (e.g., shown in light grey) of the output 500 to determine that the dataset 454 shows that the at least one sealing element is in the predetermined class 420 and thus the at least one sealing element is starting to deteriorate. It is possible that at least one dataset of the plurality of datasets 450 may show a temporary abnormal condition 460. Using the output 500, a user can differentiate a temporary abnormal condition 460 from a more imminent failure, such as class 430 and/or 440.

In other embodiments, other configurations are possible. For example, those of skill in the art will recognize, according to the principles and concepts disclosed herein, that various combinations, sub-combinations, and substitutions of the components discussed above can provide appropriate systems and methods for monitoring a valve and evaluating the condition of one or more sealing elements for a valve.

The previous description of the disclosed embodiments is provided to enable any person skilled in the art to make or use the invention. Various modifications to these embodiments will be readily apparent to those skilled in the art, and the generic principles defined herein may be applied to other embodiments without departing from the spirit or scope of the invention. Thus, the invention is not intended to be limited to the embodiments shown herein but is to be accorded the widest scope consistent with the principles and novel features disclosed herein.

## Claims

1. A valve (106) system, comprising:
a valve (106) including
a housing,
a valve (106) mechanism designed to control a flow of fluid through the housing,
a sealing element coupled to the valve (106) mechanism, and
a sensor operably coupled to at least one of the valve (106) mechanism and the sealing element; and
a controller (115) in communication with the valve (106), the controller (115) designed to:
record a first dataset (458) (456) (454) (452) (350) of measured force from the sensor during operation of the valve (106);
record a second dataset (458) (456) (454) (452) of measured force from the sensor during operation of the valve (106); and
output (500) a condition of the sealing element when the second dataset (458) (456) (454) (452) of measured force is different than the first dataset (458) (456) (454) (452) (350) of measured force.

2. The valve (106) system of claim 1, wherein the controller (115) is a control unit (152) coupled to the housing of the valve (106).

3. The valve (106) system of claim 1, wherein the controller (115) is separate from the housing and is in wired communication or wireless communication with the valve (106).

4. The valve (106) system of any one of claims 1 to 3, wherein the first dataset (458) (456) (454) (452) (350) is provided as a first graph, and the second dataset (458) (456) (454) (452) or a pre-defined dataset (458) (456) (454) (452) is provided as a second graph, and the controller (115) compares the first graph and the second graph to determine the condition of the sealing element.

5. The valve (106) system of any one of claims 1 to 4, wherein one or more of the first dataset (458) (456) (454) (452) (350), the second dataset (458) (456) (454) (452), and a pre-defined dataset (458) (456) (454) (452) includes measured values based on at least one of force measurements, pressure measurements, position measurements, or a combination thereof.

6. The valve (106) system of any one of claims 1 to 5, wherein the condition of the sealing element includes a remaining lifetime of the sealing element.

7. The valve (106) system of any one of claims 1 to 6, wherein the valve (106) mechanism includes a valve (106) disc that is selectively moveable within the housing, and the sealing element substantially circumscribes the valve (106) disc.

8. The valve (106) system of any one of claim 1 to 7, wherein the valve (106) has a first fluid conduit extending through the valve (106) in a first direction (162) and a second fluid conduit extending through the valve (106) in a second direction (164), the first direction (162) being different from the second direction (164).

9. The valve (106) system of any one of claims 1 to 8, wherein the sensor is at least one of a piezoelectric sensor, a pneumatic pressure sensor, a position sensor, or an electrical actuator.

10. The valve (106) system of any one of claims 1 to 9, wherein outputting the condition of the sealing element includes sending an alert according to a schedule, which is at least one of a daily schedule, a weekly schedule, or a monthly schedule.

11. The valve (106) system of any one of claims 1 to 10, wherein outputting the condition of the sealing element comprises estimating an amount of wear on the sealing element.

12. The valve (106) system of any one of claims 1 to 11, wherein outputting the condition of the sealing element includes disabling the valve (106) if the sealing element is determined to be near a point of failure.

13. The valve (106) system of any one of claims 1 to 12, wherein the valve (106) is provided as at least one of a single seat valve (106), double seat valve (106), a ball valve (106), a butterfly valve (106), or a globe valve (106).

14. The valve (106) system of any one of claims 1 to 13, wherein the controller (115) is designed to train an artificial intelligence model based on at least one of the first dataset (458) (456) (454) (452) (350) or the second dataset (458) (456) (454) (452).

15. The valve (106) system of claim 14, wherein the artificial intelligence model is provided as one or more of machine learning, neural networks, deep learning, computer vision, decision trees, vector quantization, gradient boosting algorithms, mutual information classifiers, and random forest classifications.
